Europäisches Patentamt

European Patent Office

Office européen des brevets

(11) Publication number: **0 421 060 A2**

# EUROPEAN PATENT APPLICATION

(21) Application number: 90112737.3

(51) Int. Cl.5: **H04N 7/08**

(22) Date of filing: 04.07.90

(30) Priority: 06.10.89 IT 1258189

(43) Date of publication of application:
**10.04.91 Bulletin 91/15**

(84) Designated Contracting States:
**AT BE CH DE DK ES FR GB GR LI LU NL SE**

(71) Applicant: **DIGITALIA S.R.L.**
**2/2, Via Molfino**
**I-16154 Genova(IT)**

(72) Inventor: **Zipoli, Claudio**
**Via Molfino 6/40**
**I-16154 Genvova(IT)**
Inventor: **Uslengo, Emilio**
**Via E. Traverso 3/15**
**I-16146 Genvova(IT)**
Inventor: **Caruso, Enrico**
**Viale Pio VII 30/3**
**I-16148 Genvova(IT)**

(74) Representative: **Porsia, Attilio, Dr. et al**
**c/o Succ. Ing. Fischetti & Weber Via Caffaro**
**3/2**
**I-16124 Genova(IT)**

(54) Method and device for the transmission of information by means of electromagnetic waves.

(57) The invention relates to a method and a device for the transmission of data, information, texts, etc., by means of electromagnetic waves, in particular without cable, using television waves. Based on the known method of this type known under the name "televideo", the invention proposes a method in which the data edited by a data supplier user (F) in the form of electrical signals of the digital type (I), in addition to being coded into transmission signals, is provided with a code for identifying the receiving user (R) and for enabling reception and subsequent decoding. The data is transmitted in real time, whereas the data is stored in permanent memories by the users (R) with a corresponding code (CU) and hence enabled for reception, so as to be able to be recalled and consulted at any time subsequently.

Fig. 1

The invention relates to a method for the transmission of data, texts, drawings, etc., in short called data by means of electromagnetic waves, in particular without cable, using television waves or the like, with which method:
- the data is edited by one or more data supplier users, in the form of electrical signals, in particular of the digital type;
- the data of each user, in the form of digital electrical signals, is sent preferably via cable to a transmitter where it is suitably transformed into electromagnetic wave modulations and transmitted at the same time as that of the other users;
- the data, in the form of wave modulations, is decoded by the receiving users and converted into a form which can be read by latter so as to be able to be displayed and consulted.

A method of this type currently used is known by the name "televideo". In the said method, the data or the like is processed by the data suppliers using a special editing processor or editing station. In the editing station, the data is processed in the form of digital electrical signals and is sent to a television transmitter. The television station broadcasts the data, in the form of digital signals, simultaneously with the television signal for the picture, as part of the television signal itself, using transmission lines of the television signal which are not used for the transmission of the television picture, but can still be used for the transmission of pictures. The data is continuously transmitted so as to be able to be consulted indiscriminately by any user, at any time, by simply appropriately decoding the signals transmitted. The transmission frequency range of the data is subdivided into pages, approximately 700 in number, each of which comprises data of the various supplier users.

The drawbacks of the known method used in the "televideo" system consist in the limited amount of data which can be transmitted on each televideo page, in the limited number of supplier users (F) which can be accepted and in the relatively long time required for updating the data contained on each page. Since it cannot be stored by the receiving users, the data must be continuously transmitted in order to ensure the continuous possibility for consultation. This makes the said data extremely susceptible to any transmission disturbances. On account of the fact that the data can be consulted by anyone, with this known method only data of a public nature can be transmitted.

In accordance with the above remarks, the invention aims to provide a method of the type described at the beginning, which allows the abovementioned drawbacks to be overcome and which in particular allows the transmission of greater quantities of data and the possibility of accepting a greater number of data supplier users, as well as the transmission, with an optimum level of protection, of data even of a confidential or secret nature only to certain users.

The invention achieves this aim with a method of the type described at the beginning, in which the data edited in the form of electrical signals, in particular of the digital type, by the data supplier users, in addition to being coded into transmission signals, is provided with a code for identifying the receiving user and for enabling reception and decoding, and is transmitted in this form by the transmitter only for a limited period of time, at any moment, whereas it is decoded and stored in permanent memories by the receiving users with the corresponding identity codes and hence enabled for decoding, so as to be able to be subsequently recalled and consulted by the users themselves.

The invention relates moreover to a device for implementing the method described above, with a plurality or several data editing stations, linked with a transmitting station, as well as a plurality of receiving stations. An editing station is provided with a device for inputting the data or the like, with means for forming the user code or codes and for applying it to the data to be transmitted and with a device for coding the data to be transmitted. The receiving stations are provided with an automatic tuning device, with automatic means for checking the user code and for enabling decoding, with an automatic decoder and with automatic means for controlling the permanent memory devices, as well as with means for recalling and displaying the stored data which can be activated by the receiving user.

The use of a user code, applied to the data transmitted, enables the said data to be addressed to any user or restricted group of users. The signals transmitted are stored directly in permanent memories. This means that continuous transmission of the data, as occurs for example in "televideo", is avoided, thus leaving space also for additional data suppliers. Since the duration of each transmission is limited, the data transmitted can be captured only at great expense and with great difficulty by non-authorized users and thus ensures a high level of confidentiality. The amount of data which can be transmitted by a data supplier is enormous since the transmission time corresponds solely to the time required for the actual transmission of the data, once or if necessary a few times in succession. Consultation of the data itself is also extremely convenient and is not subject to any momentary disturbances, such as for example disturbances in the transmission due to meteorological conditions or other factors. The receiving user in fact is able to display at any time subsequently the data stored during reception in real time, with extreme ease by recalling it directly from the memory.

In a further improvement, the transmitter transmits several times in succession the data of each data supplier. Upon reception, the signals received undergo a check to ensure that there are no reception errors due to disturbances. When some parts of the data received are affected by errors of this kind, these parts are replaced by the corresponding parts correctly received during the repeated transmissions immediately following the first transmission.

A preferred embodiment of the method and of the device according to the invention which will be discussed in greater detail in the following description envisages transmitting the data by means of television transmission signals. In particular, it is advantageously envisaged to use a part of the television transmission signal, namely those frequencies which are not used for the transmission "in clear" of television pictures and which could not be used for this purpose.

The invention also relates to other features which further improve the method and the abovementioned device and which are the subject of the sub-claims.

The particular features of the invention and the advantages resulting therefrom will emerge more clearly from the description of a few preferred embodiments illustrated by way of a non-limiting example in the accompanying drawings in which:

Fig. 1 illustrates in schematic form an embodiment of the editing station of the data supplier user and the transmitting station.

Fig. 2 illustrates in schematic form the receiving station of the receiving user.

In the present embodiment, the method according to the invention refers to the transmission of data by means of television transmission signals, namely by means of that part of the television signal involving the frequencies or the lines which are not used for the transmission of the television picture. In order to facilitate understanding of this method, it is necessary to point out that a television transmission signal is generally represented as consisting of a given number of transmission lines. Transmission of the television picture occurs by means of only some of the transmission lines available. Some of the remaining lines which are not suitable for picture transmission are used for the transmission of so-called televideo pages. Each transmission line is able to carry a limited number of data items. The number of users who are able to transmit simultaneously their data and the overall quantity of data per unit of time are therefore limited.

According to the present method, each data supplier user F edits the data in the form of digital electrical signals I. This set of digital signals I corresponding to the data will be called a file for short. Subsequently, the digital electrical signals I are coded, thus obtaining the set of signals IC. An identity code CU for the receiving user to whom the data is to be sent is applied to this set of signals IC constituting the data to be transmitted. Furthermore, the data can also be encrypted as IC + CU + CR in accordance with secret algorithms so as to ensure complete confidentiality of the data to be transmitted. The data file IC + CU + CR thus obtained is sent to the transmitting station E so that it can be transmitted. This may be effected in any manner. However, it is extremely advantageous and fast to effect this transmission via cable, for example by means of the telephone network or other types of remote transmission networks. Transmission is effected using the free lines of the television transmission signal not suitable for picture transmission. The space which can be used for the simultaneous transmission of the data is subdivided, similar to televideo, into pages, more precisely about 300 in number. Each page with this format is allocated to a data supplier user (F) and can accommodate a limited amount of data, namely about 960 characters. Per unit of time, therefore, with the method according to this example the data of about 300 users can be transmitted simultaneously. So as to allow the transmission of data with a large number of characters, or very long data files, the set of digital electrical signals IC + CU + CR sent by the data supplier to the transmitting station E, before being transmitted, is spread over several pages transmitted in succession, or more simply expressed, impaginated, and linked to each other logically by means of suitable linking signals. Very long files are therefore sent by means of a so-called packet or set of pages linked together.

Transmission of the data is effected in real time and in a non-continuous manner, namely only for the time required for its actual transmission. Consequently each data supplier user F occupies the page allocated to him only for the brief period necessary for transmission of the said data.

According to an improvement of the said method it is preferable to transmit the packet of pages containing the data more than once in succession, so that it is possible to perform a check or correction of any reception errors due to disturbances in the transmission.

During reception by the receiving users R, first it is checked that the identity code CU of the user corresponds to that of the receiving user. Receiving users whose identity code does not correspond to that transmitted are not enabled for the subsequent processing and storage of the data file transmitted in intelligible form and are thus automatically excluded. Receiving users whose identity code CU corresponds to that transmitted are enabled for subsequent processing of the signals transmitted. The files IC + CU + CR transmitted are initially decrypted and decoded. Subsequently they are checked for any reception errors and finally the data I subdivided into pages is recomposed in its original form in a single file. The data can be both stored and printed or if necessary also directly displayed on a screen or the like. It is advantageous, however, to store the data on a permanent medium and in such a way that the user himself is able to print or display the said data any time subsequently, independently of the moment in which transmission occurred. This enables the transmission time to be limited to solely the time required for the said transmission. All the operations including storage on the permanent medium are carried out automatically during reception of a transmitted signal.

Checking of the transmitted signals for reception errors can be carried out in any manner desired. Preferably, before recomposition of the transmitted file, the individual pages of the packet are temporarily stored separately and analysed. The pages which have such errors are refused and can be replaced by the same pages transmitted subsequently, owing to the fact that the data or data packet is transmitted several times in straight succession. In particular, the check is carried out owing to the use of a set of redundant characters provided at each line end of the page transmitted.

In order to protect further the data transmitted using this method, thus making it inaccessible by means of this system, the digital signals I which represent the characters contained in the individual pages, when they are coded, are made up of only 7 bits plus one so-called parity bit, rather than the usual 8 bits.

This constitutes advantageously additional protective processing of the transmitted data, in particular against any attempts to gain access illegitimately to the data itself.

In a further improvement of the method according to this example of embodiment, each data file is transmitted and then stored by the receiving user using the same name, the same extension and the same configurations allocated to it by the data supplier user, this allowing the transmission not only of passive data but also of control programs.

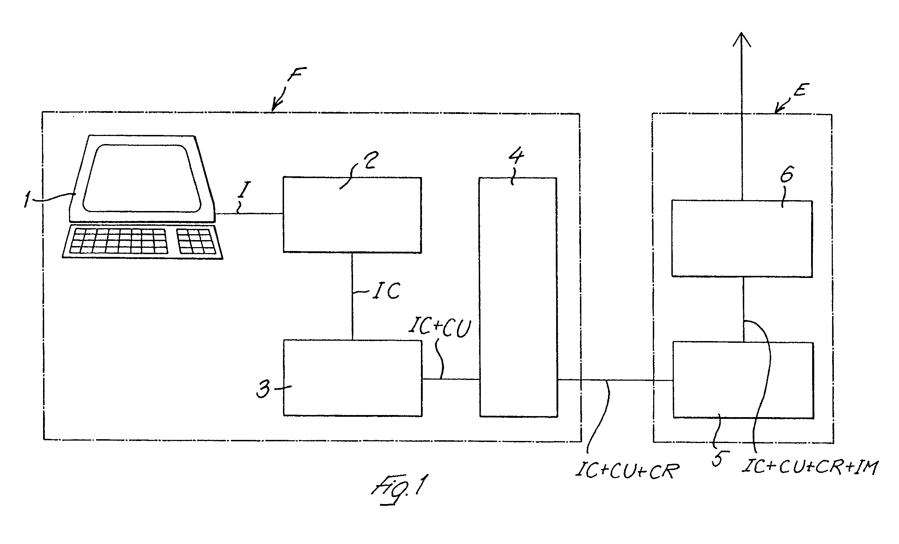

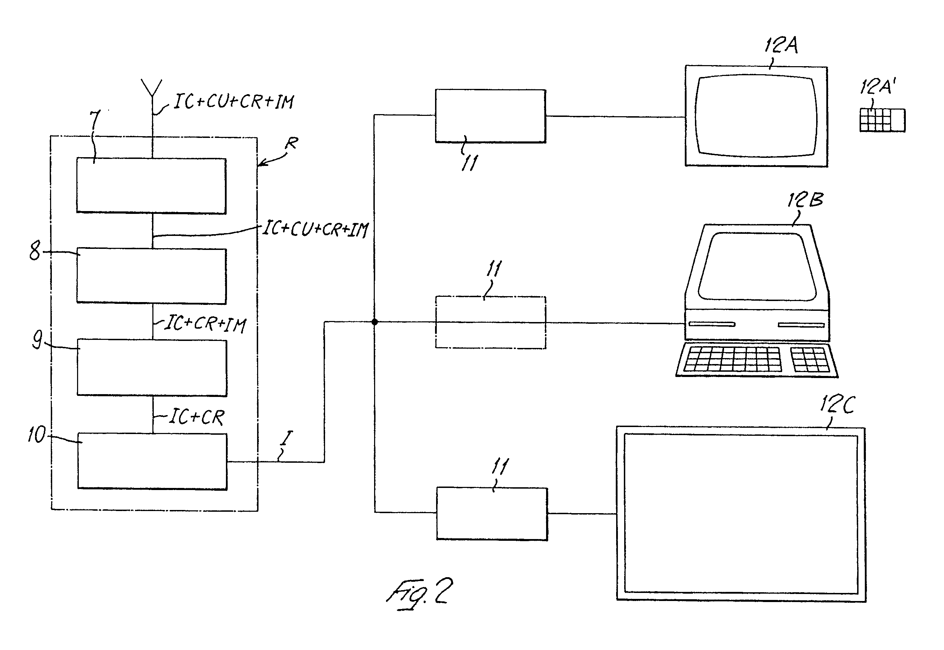

An embodiment of a device for implementing the abovementioned method is illustrated in schematic form in Figs. 1 and 2.

The station of a supplier user F illustrated consists essentially of a station for editing and inputting the data, namely an editing station 1, by means of which an information file in the form of a set of digital electrical signals is created.

Downstream of the editing station 1 there are provided in succession:
- a coding device 2 which in particular transforms the 8-bit characters into 7-bit characters plus a parity bit;
- a device 3 for inputting and applying the user code to the data file;
- an encrypting device 4;
- a transmission device (not illustrated), in particular for the transmission, via cable, preferably by means of the telephone network (known also as a modem), of the files to the transmitting station.

These devices may be realized in any manner desired, either as separate units or integrated in a single unit. For this purpose it is also possible to use an electronic processor, for example a so-called personal computer which can be provided with an expansion board containing the coding device 2, the user code device 3, with an encrypting device 4, as well as with its modem board and a suitable program for imputting the data and operating the said devices. In cases where the hardware of the electronic processor permits it, the electronic processor itself can also be made to perform the functions of the abovementioned devices using a suitable program, thus avoiding assembly of the said devices.

The transmitting station E comprises an impagination device 5 which subdivides the data files on the individual pages of televideo format, forming the abovementioned televideo packet, and a transmission unit 6.

The impagination device 5 may also consist of a unit suitably constructed for this purpose or of an electronic processor with a suitable control program.

As can be seen from Fig. 2, in which only three examples are illustrated, the receiving users R may be provided with various types of devices.

Each device consists of:
- an automatic fine tuning device 7;
- an automatic device 8 for checking the user code and for enabling deccding;
- an automatic device 9 for checking the reception errors and for re-linking the data file subdivided into individual pages of "televideo" format, in particular with a volatile memory;
- an automatic decoding and decrypting device 10;
- an automatic permanent storage device 11;
- a device 12 for recalling the data from the memory 11 and displaying it.

The various types of devices are characterized essentially by the type of recall and display device 12.

As is illustrated, it is possible to use, for this purpose, a conventional television of the remote-control type to which the abovementioned devices are connected, either as separate units or as integration boards accommodated in the television itself. In this case, it is obvious that the tuning device 7 may be omitted, it being possible to use directly the television tuner. Recalling of the data from the memory 11 can be effected for example by means of the remote control device 12', using certain television channel selection buttons.

In place of the remote-control television, a simple monitor 12c can be used as the display device and is also provided either separately or integrated in a single unit containing the abovementioned devices.

It is extremely advantageous to use as the display device an electronic processor, for example a personal computer 12b. In this case, as moreover in the case of the simple monitor 12c, it is essential that the tuner 7 is provided. However, the permanent memory 11, which is absolutely necessary in the case of the remote-control television 12a and the monitor 12c, can be replaced by the memory units, both of the electronic type (RAM) and of the magnetic type (floppy disk, hard disk or magnetic tapes), of the electronic processor 12b. In this case also, where the hardware of the electronic processor permits it, a simple control program can also be used such that the various decoding, user code identification and decrypting functions are performed by the units of the processor itself, thus resulting in less outlay. The use of the electronic processor 12b as a display device is advantageous also because of the fact that once the data has been stored, for example on one of its magnetic memories, it can be managed by the receiving user R in exactly the same way as the files which the receiving user himself has edited with the aid of the processor.

Obviously, the display devices 12 may also consist of other types of devices, such as for example simple printers.

With reference to the above description and illustrations, the advantages of the method according to the invention and of the device for implementing it are obvious.

These advantages consist mainly:
- in the possibility of making maximum use of the spaces available for data transmission, in particular in transmission signals of the television type;
- in the possibility of choosing directly the user or the users enabled for reception of the data, in particular using an identity code with progressive delimitation of the range of users enabled, down to a single receiving user;
- in the extreme protection against any attempts at non-authorised reading of the data, ensuring a high degree of confidentiality of the data;
- in the possibility of using a large range of different apparatus, both constructed for this purpose and already existing and also utilisable for other purposes.

Obviously, the invention is not limited to the embodiments just described and illustrated, but can be amply varied and modified, in particular from a constructional point of view. The method and the device according to the invention are not limited to solely the transmission of data in written form or of a graphic and figurative type, but can also be used for the transmission of data of any type for example also in the form of sounds and the like. The use is not limited exclusively to solely the communication of data, but may also comprise applications in the field of devices for controlling and operating industrial plants and machinery and of other kinds, for example radio relay systems. For example, from a central control station, or from the data supplier user (F), one or more operating sections of one or more plants can be remotely operated using one or more receiving stations (R). This avoids advantageously a large outlay on connecting cables and allows the plants to be both expanded and converted, with a very limited investment as regards the control devices. All of which without abandoning the inventive principle described above and claimed below.

## Claims

1. Method for the transmission of data, texts, drawings, etc, in short called data by means of electromagnetic waves such as television waves, or the like, with which method:
- the data is edited by one or more data supplier users (F), in the form of electrical signals (I) for example of the digital type;
- the data of each supplier user (F) in the form of digital electrical signals (I) is sent preferably via cable to a transmitter where it is transformed into electromagnetic wave modulations and transmitted, without using cable, at the same time as that of other supplier users (F);
- the data, in the form of wave modulations, is decoded by the receiving users (R) and converted into a form utilisable by the latter so as to be able to be displayed and consulted, characterized in that the data, edited in the form of electrical signals (I), in particular of the digital type, by the data supplier users (F), in addition to being coded into transmission signals (IC), is provided with an identity code (CU) for the receiving user (R) and for enabling reception and decoding and is transmitted in this form (IC + CU) by the transmitter only for a limited period of time, at any moment, whereas it is decoded and stored in permanent memories by the receiving users (R) with the corresponding identity codes (CU) and hence enabled for decoding, so as to be able to be recalled and consulted at any time by the users (R) themselves.

2. Method according to Claim 1, characterized in that the data edited by the data supplier users (F) is transmitted to the transmitter (E) and subsequently to the receiving user (R) in encrypted form (IC + CU + CR), the receiving user (R) being able to decrypt it.

3. Method according to Claim 1 or 2, characterized in that the said data of each supplier user (F) is transmitted several times in succession by the transmitting station (E) and the receiving user (R) performs a check for any reception errors, in which the data affected by errors and received during the first transmission is replaced by the corrected data of the subsequent transmissions.

4. Method according to one or more of the preceding claims, characterized in that the data is edited in the form of a set of digital signals (I), so-called files, in which each character consists of 7 bits plus a parity bit.

5. Method according to one or more of the preceding claims, characterized in that the transmission of the data is effected by means of television-type transmission signals, using in particular the part of the television signal, or the set of transmission lines, which cannot be used for the transmission of television pictures.

6. Method according to Claim 5, characterized in that, for transmission of the data, about 16 lines of the television transmission signal are used, the available space of which for data is divided into several parts, preferably into pages with a format similar to the pages of so-called "televideo", each of which parts or pages is assigned to a data supplier user (F) who occupies it only for the brief period of time required for the actual transmission of his data, whereas for the remaining time the same part or page can be allocated to additional information supplier users (F).

7. Method according to one or more of Claims 5 to 6, characterized in that preferably in the transmitting station (E) very long data files are broken down (impaginated) into several pages of televideo format which are logically linked together in the manner of a so-called "televideo packet" (IC + CU + CR + IM) and which are transmitted one after another, whereas when received by the users (R) enabled therefor and after checking for reception errors the pages of the packet are again linked together so as to form the original data file (I).

8. Method according to one or more of the preceding claims, characterized in that, where the code of the receiving user (R) corresponds to the identity code (R) received, the reception error checking, decoding, decrypting and storage operations are performed automatically, whereas, if this is not the case, the receiving user (R) is automatically excluded.

9. Method according to one or more of the preceding claims, characterized in that checking of the reception errors is performed by the receiving user (R) with the aid of a set of redundant characters for each end of line of a transmitted page.

10. Method according to one or more of the preceding claims, characterized in that, instead of automatic storage by the receiving user (R), the data (I) can be printed or directly displayed.

11. Method according to one or more of the preceding claims, characterized in that the data may also consist of sounds, noises, voices, pictures and the like or of programs for controlling devices.

12. Device for implementing the method according to one or more of the preceding claims and comprising:
- a data editing station for each data supplier user (F);
- a transmitting station (E) connected preferably via cable, in particular by means of telephone lines, to the data editing stations;
- any number of receiving stations, provided with a tuning device (7) and a display device (12), characterized in that:
- each data editing station consists of a device for inputting the data (I), to which there are connected in succession a coding device (2), a device (3) for forming and applying the user code (CU) to the data (I), an encrypting device (4) if required and a device (4) for the transmission, preferably via cable, of the data files to the transmitting station (E);
- the transmitting station (E) has an impagination device (5) for subdividing long data files into several pages with a format similar to pages with a so-called "televideo" format;
- each receiving station comprises an automatic tuning device (7), a successive automatic device for checking the user code (8), an automatic device (9) for checking and correcting the reception errors and for recomposition of the data files (IC + CR + IM) into individual pages, an automatic decoding and, if required, decrypting device (10), an automatic permanent storage device (11) and a device (12) for displaying and recalling the permanently stored data.

13. Device according to Claim 12, characterized in that the data editing station may consist of individual units operationally linked together or of a single integrated unit.

14. Device according to Claim 12, characterized in that the data editing station may consist of an electronic processor which may be provided, if necessary, with a coding device (2), a device (3) for forming and applying the user code (CU), an encrypting device (4) and a modem, realized in the form of electronic integration boards and a program for controlling the devices and editing texts, or the pre-existing operating units of which may be controlled by means of a suitable program to be operated in a manner corresponding to the said devices.

15. Device according to one or more of the preceding Claims 12 to 14, characterized in that the impaginaion device (5) may consist of an electronic processor suitably operated by means of an impagination program.

16. Device according to one or more of the preceding claims, characterized in that the receiving station may consist of a television (12a) of the remote control type, provided with a device (8) for checking the user code (CU), with a device (9) for checking and correction, as well as for recomposition of the data files, with a decoding and and decrypting device (11), and with a permanent storage device (11) as well as with manual control means (12a').

17. Device according to one or more of the preceding Claims 12 to 15, characterized in that the receiving station may comprise any type of monitor (12c), for example of the liquid crystal type, or a printer, provided with a tuning device (7), with an automatic device (8) for checking the user code (CU), an automatic device (9) for checking and correction of the reception errors, as well for recomposition of the data files, an automatic decoding and decrypting device (10), and with an automatic storage device (11), either as separate units or as an integrated unit.

18. Device according to Claims 12 to 15, characterized in that it may comprise an electronic processor (12b) as a display device and if necessary as a permanent storage device (11).

19. Device according to Claim 18, characterized in that the electronic processor (12b) is provided either in the form of a separate device or in the form of an expansion board, with a tuning device (7), with an automatic device for checking the user code (CU), with an automatic device (9) for checking and correction of the reception errors as well as for recomposition of the data files, with an automatic decoding and decrypting device (10) and with a suitable control program.

20. Device according to Claim 19, characterized in that the automatic device (8) for checking the user code (CU), the automatic device (9) for checking and correction of the reception errors, as well as for recomposition of the data files and the automatic decoding and/or decrypting device (10) may consist of pre-existing operating units of the electronic processor (12b) itself operated by a suitable control program.

21. Device according to Claim 12, characterized in that a printer, a telefax or the like may be provided as the display device (12).

22. Use of the method and of the device according to one or more of the preceding claims as a method and device for controlling and actuating the operative phases of one or more industrial plants or machines, in which the central control unit consists of the data supplier user (F) linked with the transmitter (E) and the receiving station or stations (R) are linked and operate the devices controlling the operating sections of the said plants, whereas the transmitted data is constituted by suitable control programs, or of plants and devices of another kind, for example radio relay systems.

*Fig.1*

EP 0 421 060 A2

Fig.2